(19) Europäisches Patentamt / European Patent Office / Office européen des brevets

(11) **EP 4 578 537 A1**

(12) **EUROPEAN PATENT APPLICATION**
published in accordance with Art. 153(4) EPC

(43) Date of publication:
**02.07.2025 Bulletin 2025/27**

(21) Application number: 24866576.2

(22) Date of filing: 26.03.2024

(51) International Patent Classification (IPC):
**B01D 71/44** (2006.01)     **B01D 71/52** (2006.01)
**B01D 67/00** (2006.01)

(52) Cooperative Patent Classification (CPC):
B01D 17/00; B01D 67/00; B01D 69/02;
B01D 71/44; B01D 71/52; C08J 9/28; C08J 9/40

(86) International application number:
**PCT/CN2024/083756**

(87) International publication number:
**WO 2025/081718 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 19.10.2023 CN 202311360008

(71) Applicant: Suzhou Institute of Nano-tech and Nano-bionics
(SINANO) Chinese Academy of Sciences
Suzhou, Jiangsu 215123 (CN)

(72) Inventors:
• **SHENG, Zhizhi**
  Suzhou, Jiangsu 215123 (CN)
• **WU, Tong**
  Suzhou, Jiangsu 215123 (CN)
• **ZHANG, Xuetong**
  Suzhou, Jiangsu 215123 (CN)

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **HIERARCHICALLY POROUS AEROGEL FILM, IN-SITU CONFINED LIQUID FILM, PREPARATION METHOD, AND USE**

(57) The present application provides a hierarchical porous aerogel membrane and an in-situ confined liquid membrane, and a preparation method and application. The hierarchical porous aerogel membrane has micrometer-scale pores distributed on a membrane surface, micrometer-scale channels, submicrometer-scale channels and nanometer-scale three-dimensional mesopores are distributed inside the hierarchical porous aerogel membrane, and the pores respectively corresponding to the micrometer-scale channels, the submicrometer-scale channels and the nanometer-scale three-dimensional network mesopores are simultaneously distributed on a membrane cross-section of the hierarchical porous aerogel membrane. The hierarchical porous aerogel membrane can form an aerogel-based confined liquid membrane in situ during the membrane emulsification and oil-water separation. The aerogel-based confined liquid membrane has a good drag-reduction effect and has both membrane emulsification and oil-water separation functions. When the membrane is used for membrane emulsification, an emulsion with uniform size distribution can be obtained. When the membrane is used for oil-water separation, an oil-water separation efficiency of more than 99% can be achieved.

FIG. 1a

## Description

The present application is based on and claims the priority of the Chinese patent application No. 202311360008.4 filed on October 19, 2023, and entitled "HIERARCHICAL POROUS AEROGEL MEMBRANE AND IN-SITU LIQUID CONFINED MEMBRANE, AND PREPARATION METHOD AND USE THEREOF".

## TECHNICAL FIELD

The present application belongs to the technical field of membranes, and particularly relates to a hierarchical porous aerogel membrane, and a preparation method and use thereof, a hierarchical porous aerogel-based in-situ liquid confined membrane, a membrane module, a method for membrane emulsification, a method for separating an emulsion, and an emulsification device.

## BACKGROUND TECHNOLOGY

Membrane emulsification has attracted widespread attention as a new technology for preparing monodisperse emulsions. The membrane emulsification technology has advantages of low energy consumption, mild and uniform preparation conditions, simple and convenient operations and easy scale-up capability, etc. It is widely applied in fields of extraction and separation, biomedicines, petroleum industry, cosmetics and so on. With the rapid development of membrane emulsification technology, membrane emulsification materials include ceramic membranes such as alumina membranes, zirconium oxide membranes, silicon oxide membranes, organic material membranes such as polytetrafluoroethylene membranes, polyethylene membranes, polypropylene membranes and polycarbonate membranes, and also metal membranes such as nickel porous membranes, stainless steel porous membranes, and microchannel chips. The commonly used emulsification membrane is a glass membrane named Shirasu Porous Glass (SPG) with double continuous network and a narrow pore size distribution sintered by a phase separation method from special Japanese active volcanic lime. The SPG membrane has the same three-dimensional network structure of pores both inside and outside, which facilitates the fall off of disperse phases during membrane emulsification. However, due to the constraints of its pore size range, pore size distribution, porosity, surface properties and pore shape, etc., it cannot meet the requirements of membrane emulsification technology with anti-fouling and energy-saving properties.

Currently, the existing porous membrane materials have a limited service life due to membrane fouling caused by easy adsorption of small molecules on the solid porous surface. In recent years, liquid materials have gradually attracted attention because of their small intermolecular distances, strong interaction forces, and superior flowability, as well as their capability of forming composites with solid matrices to achieve multi-functions. Liquid-infused solid porous materials can not only provide a slippery and anti-fouling behavior, while also endow the composite membranes with precise gating behavior and low-energy-consumption for fluid transport.

Aerogel is an emerging porous material with a three-dimensional nanoporous structure with high porosity, high specific surface area, and ultra-low density. The unique structure of aerogel enables key applications in thermal insulation, gas adsorption and separation, water treatment, filtration and separation, composite materials, etc. Among them, aramid aerogel has excellent mechanical properties, chemical stability and thermal stability (with a decomposition temperature up to 550°C). It can be used as a self-supporting solid matrix with flexibility and rigidity, and can provide rich nanoconfinements for functional liquids. However, the existing solid-liquid composite membranes based on the aramid aerogel need to be impregnated with functional liquid right before use, and the liquid replenishing steps are relatively cumbersome. Also, the transmembrane pressure difference of the pre-infused solid-liquid composite membranes impregnated with the functional liquid is usually high, and a high driving pressure is required for the target liquid to permeate. Moreover, the existing reported solid-liquid composite membranes only have a single function of either membrane emulsification or oil-water separation, and their application scenarios are relatively simple.

## CONTENT OF THE INVENTION

In order to solve all or part of the aforementioned technical problems, the present application provides the following technical solutions:

One of the objectives of the present application is to provide a hierarchical porous aerogel membrane, wherein the hierarchical porous aerogel membrane has micrometer-scale pores distributed on a membrane surface thereof, a micrometer-scale channel, a submicrometer-scale channel and a nanometer-scale three-dimensional network mesopore are distributed inside the hierarchical porous aerogel membrane, and the multiscale pores respectively corresponding to the micrometer-scale channel, the submicrometer-scale channel and the nanometer-scale three-dimensional network mesopore are simultaneously distributed on a membrane cross-section of the hierarchical porous aerogel membrane.

The hierarchical porous aerogel membrane with the aforementioned structure can provide abundant confined spaces for functional liquid at micrometer, submicrometer, and nanometer scales. The formed confined spaces can allow in-situ formation of a liquid membrane when an emulsion sample passes through the aerogel membrane, thereby generating a stimulant response and realizing the diversity of membrane performance. The hierarchical porous aerogel membrane with the aforementioned structure is suitable for the fields of membrane emulsification and emulsion separation simultaneously.

In some embodiments, a pore size of the micrometer-scale pores is 20-80 $\mu$m.

In some embodiments, a diameter of the micrometer-scale channels is 20-50 $\mu$m.

In some embodiments, a diameter of the sub-micrometer channels is 2-20 $\mu$m.

In some embodiments, a pore size of the nanometer-scale three-dimensional network mesopores is less than 50 nm.

In some embodiments, the micrometer-scale channels and the submicrometer-scale channels are longitudinal channels. The "longitudinal channels" mentioned in the present application refers to an included angle $\alpha$ between the channel and the membrane surface is $0<\alpha<180$, which is defined as a longitudinal direction. For example, the micrometer-scale channels and the submicrometer-scale channels are longitudinal channels that are perpendicular or nearly perpendicular to the membrane surface, and the micrometer-scale channels and submicrometer-scale channels are arranged in layers in a direction of membrane thickness. The beneficial effects of this technical solution are: When an emulsion contacts the membrane surface, the water in the emulsion will preferentially infiltrate the pores/channels in the membrane to form an in-situ confined liquid membrane. The hierarchical pore in-situ confined liquid membrane can be modulated with tunable membrane functions through pressure regulation to achieve on-demand membrane emulsification and membrane separation.

In some embodiments, the hierarchical pores of the hierarchical porous aerogel membrane are nanometer-scale three-dimensional network mesopores obtained by instant phase separation and sol-gel transition between Kevlar nanofibers and pore-forming high-molecular polymers, followed by solvent exchange and specific drying. Specifically: the hierarchical porous aerogel membrane is obtained in such a manner that Kevlar nanofibers and pore-forming high-molecular polymers entangle with each other in a sol-gel transition process to form a polymer-rich phase and a polymer-poor phase, wherein the polymer-rich phase and a non-solvent undergo instantaneous phase separation to form a finger micrometer-scale channel, and the polymer-poor phase undergoes delayed phase separation with subsequent solvent exchange and drying treatment to form a nanometer-scale three-dimensional mesopore network. The drying treatment includes special drying treatment, for example, vacuum drying (e.g., freeze drying), convection drying (e.g., supercritical drying), microwave drying, solar drying, dehumidification drying, furnace gas drying, chemical drying, and so on.

Preferably, the high-molecular polymer includes at least one of polyethylene glycol, polyvinyl alcohol and polyvinyl pyrrolidone. More preferably, polyvinyl pyrrolidone is included.

In some embodiments, pore areas of three types of pores corresponding to the micrometer-scale channels, the submicrometer-scale channels, and the nanometer-scale three-dimensional mesopore network account for 2-5%, 40-65%, and 30-68%, respectively.

In some embodiments, the hierarchical porous aerogel membranes are superhydrophilic and superlipophilic in air.

In some embodiments, the infiltration speed of an aqueous phase to the hierarchical porous aerogel membrane is faster than that of an oil phase to the hierarchical porous aerogel membrane, because of the superhydrophilic nature of the in-situ formation of a confined liquid membrane with water phase.

The second one of the objectives of the present application is to provide a method for preparing a hierarchical porous aerogel membrane, including: coating a casting solution containing a Kevlar nanofiber and a high-molecular polymer onto a substrate, and then transferring into a coagulation bath to form a hierarchical porous hydrogel membrane; and subjecting the hierarchical porous hydrogel membrane to solvent replacement treatment and a drying treatment to obtain the hierarchical porous aerogel membrane.

The aforementioned preparation method obtains the aerogel membrane by coating the casting solution containing the Kevlar nanofiber and the high-molecular polymer on the substrate, and then transferring into the coagulation bath for instantaneous phase separation. The method can obtain a hierarchical porous aerogel membrane having a micrometer-scale pore on a membrane surface, with a micrometer-scale channel, a submicrometer-scale channel and a nanometer-scale three-dimensional network mesopore on the membrane section.

In some embodiments, a manner of coating the casting solution on the substrate includes a single-layer substrate method.

Further, the single-layer substrate method includes: coating the casting solution on at least one surface of a substrate, and then transferring the as-casted membrane to a coagulation bath to form a hierarchical porous hydrogel membrane; after subsequent solvent exchange and drying treatment in sequence, a hierarchical porous aerogel membrane with longitudinal channels will be obtained.

In some embodiments, a mass ratio of the Kevlar nanofiber to the polymer in the casting solution is 4:1-1:2, and the mass ratio that is too high or too low will weaken the degree of phase separation.

In some embodiments, a fineness of the Kevlar nanofiber is 200 D-1,000 D.

In some embodiments, the polymer includes at least one of polyethylene glycol, polyvinyl alcohol and polyvinyl pyrrolidone. Preferably, the polymer includes polyvinyl pyrrolidone. More preferably, an average molecular weight of the polyvinyl pyrrolidone is 8 kDa-1,300 kDa, for example, including polyvinyl pyrrolidone with an average molecular weight of 8,000 (K16), 24,000 (K23), 58,000 (K29), and 1,300,000 (K88). If the molecular weight is too low, instantaneous phase separation will be difficult to occur, and if the molecular weight is too high, the viscosity of the casting solution will be very high.

In some embodiments, the method for preparing the casting solution includes: providing a Kevlar nanofiber dispersion, adding the polymer into the Kevlar nanofiber dispersion to obtain the casting solution.

Further, a method for preparing the Kevlar nanofiber dispersion includes: uniformly dispersing Kevlar fibers, an alkaline regulator, and a viscosity reducer in dimethyl sulfoxide to obtain the Kevlar nanofiber dispersion.

Further, the alkaline regulator includes potassium tert-butoxide and/or potassium hydroxide, and the alkaline regulator is at least used for providing a strong alkaline environment to decompose the Kevlar fiber.

Further, the viscosity reducer includes methanol and/or ethanol, and is used for reducing the viscosity of the dispersion.

Further, the concentration of the Kevlar nanofiber in the Kevlar nanofiber dispersion is 1-3 wt.%. If the concentration is too low, the strength of the prepared hierarchical porous aerogel membrane will be too low; and if the concentration is too high, the viscosity of the dispersion will be too high and thus the dispersion will be uneven.

Further, a mass ratio of the Kevlar fiber, the alkaline regulator and the viscosity reducer in the Kevlar nanofiber dispersion is 1:1:1-2:2:1, preferably 1:1:1.

In some embodiments, the method of coating the casting solution on the substrate includes, for example, a blade coating method, but is not limited to it.

Further, a speed of the blade coating method is 5-10 mm/s. A coating time is 5-15 s. A distance between a blade and the substrate is 250-1,000 μm.

In some embodiments, the substrate includes glass and/or aluminum foil.

In some embodiments, the coagulation bath includes water or a combination of water and ethanol.

Further, when the coagulation bath includes water and ethanol, a volume ratio of water to ethanol is 5:1-1:1. If the ethanol content is too high, the prepared hierarchical porous aerogel membrane may be uneven. By adjusting the volume ratio of water to ethanol, the growth direction of the micrometer-scale channel and a fine micrometer-scale channel can be adjusted. The volume ratio of water to ethanol is preferably 2:1-1:1, and a hierarchical porous aerogel membrane with vertical or nearly vertical micrometer-scale channels and fine micrometer-scale channels is obtained.

In some embodiments, a temperature of the coagulation bath is 0-20°C. For example, the coagulation bath may be a coagulation bath at a low temperature of 0-3°C. The low temperature coagulation bath is prone to obtaining a hierarchical porous gel membrane with a dense surface. For example, the coagulation bath may also a coagulation bath at room temperature of 10-20°C.

In some embodiments, the solvent exchange treatment employs a mixed solution including tert-Butyl alcohol and water. Preferably, the volume ratio of tert-Butyl alcohol to water is 1:1-1:4.

In some embodiments, the drying process includes freeze drying and/or supercritical drying. Preferably, the drying treatment includes freeze drying. More preferably, the freeze-drying includes continuous drying under temperature conditions of -40--100°C and air pressure conditions of 5-100 kPa for 4-6 h.

In some embodiments, the preparation method regulates the number, pore size and distribution of micrometer-scale pores of the hierarchical porous aerogel membrane, and regulates the morphology, number and distribution of the micrometer-scale channels and submicrometer-scale channels by regulating at least one of the mass ratio of the Kevlar nanofiber and the polymer in the casting solution, the content of the solvent in the casting solution, the temperature of the coagulation bath, the composition of the coagulation bath, and the molecular weight of the polymer.

A third one of the objectives of the present application is to provide a hierarchical porous aerogel membrane obtained according to the aforementioned preparation method.

A fourth one of the objectives of the present application is to provide a hierarchical porous aerogel-based in-situ confined liquid membrane, which includes the hierarchical porous aerogel membrane described in any of the aforementioned technical solutions, and a liquid infiltrated and filled in the hierarchical porous aerogel membrane.

In some embodiments, the hierarchical porous aerogel-based in-situ confined liquid membrane is formed in situ during membrane emulsification or emulsion separation by filling a membrane emulsification sample or the emulsion separation sample in a hierarchical porous aerogel membrane in a process of passing the sample through the hierarchical porous aerogel membrane. Compared with a solid-liquid composite membrane pre-loaded with functional liquid, the hierarchical porous aerogel-based in-situ confined liquid membrane formed in situ enables drag-reduction and energy-saving behavior; and the hierarchical porous aerogel-based in-situ confined liquid membrane has a long service life, can be repeatedly recycled, and has good anti-fouling performance.

In some embodiments, the hierarchical porous aerogel-based in-situ confined liquid membrane can be switched between membrane emulsification mode and emulsion separation mode according to different driving pressures and/or injection flow rates.

In some embodiments, when the sample injection pressure is 30-45 kPa and/or the injection flow rate is 1 ml/min-3 ml/min, the hierarchical porous aerogel-based in-situ confined liquid membrane has at least the membrane emulsification function; and when the sample injection pressure is -0.09--0.1 MPa and/or the injection speed is 0.1 ml/min-0.3 ml/min, the hierarchical porous aerogel-based in-situ confined liquid membrane has at least the oil-water separation function.

In some embodiments, the hierarchical porous aerogel-based in-situ confined liquid membrane is superoleophobic in water.

The fifth one of the objectives of the present application is to provide use of the hierarchical porous aerogel-based in-situ confined liquid membrane described in any of the aforementioned technical solutions in membrane emulsification and/or oil-water separation.

The sixth one of the objectives of the present application is to provide a membrane assembly, which includes multiple layers of the hierarchical porous aerogel membrane described in any one of the aforementioned technical solutions.

In some embodiments, the membrane assembly includes a plurality of the hierarchical porous aerogel membranes disposed as stacked with each other, and the hierarchical porous aerogel membrane has perpendicular channels.

Further, in the membrane assembly, the micrometer-scale channels in one hierarchical porous aerogel membrane are disposed adjacent to the submicrometer-scale channels in another adjacent hierarchical porous aerogel membrane. Application of the membrane assembly with this structure to membrane emulsification can obtain an oil/water/oil multiple emulsion.

Still further, the membrane assembly is a double-layer membrane structure, wherein the micrometer-scale channels of the first hierarchical porous aerogel membrane are disposed adjacent to the submicrometer-scale channels of the second hierarchical porous aerogel membrane.

The seventh one of the objectives of the present application is to provide a membrane emulsification method, including a direct membrane emulsification method or a premix membrane emulsification method.

The direct membrane emulsification method includes: passing a dispersed phase through the hierarchical porous aerogel membrane or the membrane assembly described in any one of the aforementioned technical solutions under the conditions of a pressure of 30-45 kPa and/or an injection rate of 1 ml/min-3 ml/min, and then allowing to enter a continuous phase to obtain an emulsion.

The premix membrane emulsification method includes: passing a uniform premix emulsion containing an oil phase, an aqueous phase and an emulsifier through the hierarchical porous aerogel membrane or the membrane assembly described in any one of the aforementioned technical solutions under conditions of a pressure of 30-45 kPa and/or an injection speed of 1 ml/min-3 ml/min to obtain an emulsion.

The emulsion obtained by the aforementioned membrane emulsification method has a uniform size distribution and a small particle size, and oil-in-water emulsions and oil/water/oil multiple emulsions can be obtained with a good emulsification effect.

In some embodiments, the dispersed phase in the direct membrane emulsification method and the oil phase in the premixed membrane emulsification method are organic substances that are immiscible with water. Preferably, at least one of dodecane, hexadecane, cyclohexane, mineral oil, kerosene and dimethyl silicone oil is included. More preferably, at least one of dodecane, hexadecane and cyclohexane is included.

And/or, in the direct membrane emulsification method, the dispersed phase is allowed to pass through the membrane assembly and then enter a mixed solution containing a continuous phase and a surfactant, wherein the surfactant includes at least one of oleth-10 carboxylic acid, Tween 80, Tween 85, Span 80, Span 85 and sodium dodecyl sulfate, preferably oleth-10 carboxylic acid. Compared with other surfactants, the beneficial effect of the surfactant is that the prepared primary emulsion has better stability and is more uniformly mixed.

In some embodiments, in the premix emulsion, the volume ratio of the oil phase to the water phase is 1:3-3:1.

In the premix membrane emulsification method, the emulsifier includes at least one of oleth-10 carboxylic acid, Tween 80, Tween 85, Span 80, Span 85 and sodium dodecyl sulfate, preferably oleth-10 carboxylic acid.

In some embodiments, the content of the emulsifier is 1%-5% of the total mass of the premix emulsion.

In some embodiments, the emulsion obtained by the membrane emulsification method is an oil-in-water emulsion and/or an oil/water/oil emulsion. For example, in the direct membrane emulsification method, the emulsion obtained by using a membrane assembly with a double-layer membrane structure is an oil/water/oil multiple emulsion.

In some embodiments, the size distribution of the emulsion obtained by the membrane emulsification method is 0-10 $\mu$m. For example, the size distribution of the emulsion obtained by the membrane emulsification method is 0-10 $\mu$m, and is not 0.

In some embodiments, the creaming index of the emulsion obtained by the membrane emulsification method is 54.7%-78.8%.

The eighth one of the objectives of the present application is to provide an oil/water separation method, including: passing a sample to be separated through the hierarchical porous aerogel membrane described in any one of the aforementioned technical solutions or the membrane assembly described in any one of the aforementioned technical solutions under the action of a pressure of -0.09--0.1 MPa and/or an injection speed of 0.1 ml/ min-0.3 ml/min, to achieve oil/water separation.

In some embodiments, the oil-water separation efficiency of the emulsion separation method is greater than 99%.

The ninth one of the objectives of the present application is to provide an emulsification device, which includes a liquid inlet channel, a membrane unit and a driving mechanism, wherein the membrane unit includes the hierarchical porous aerogel membrane described in any of the aforementioned technical solutions or the membrane assembly described in any of the aforementioned technical solutions, one end of the liquid inlet channel is communicated with the membrane unit, and the sample to be emulsified is injected into the liquid inlet channel under the action of the driving mechanism and flows into the membrane unit for emulsification.

In some embodiments, the membrane unit includes the aforementioned membrane assembly with the double-layer membrane structure. That is, the micrometer-scale channel of the first hierarchical porous aerogel membrane of the membrane assembly with the double-layer membrane structure is disposed adjacent to the submicrometer-scale channel of the second hierarchical porous aerogel membrane, and the second hierarchical porous aerogel membrane is disposed close to the liquid inlet channel, so that the sample to be emulsified flows into the membrane assembly in a direction of first passing through the micrometer-scale channel of the second hierarchical porous aerogel membrane. The emulsification device of the membrane assembly having the aforementioned structure and installation features can be used for preparing oil/water/oil multiple emulsions.

Compared with the prior art, the present application has at least the following beneficial effects.

(1) The aerogel membrane provided by the present application has hierarchical porous features at the micrometer, submicrometer and nanometer scales, and can provide abundant confined space for liquid; the liquid membrane formed in situ during membrane emulsification and emulsion separation has drag-reducing and energy-saving effect, and can be applied to membrane emulsification and oil/water separation simultaneously under different driving pressures. The emulsion prepared by the aerogel membrane for membrane emulsification has a uniform size and a high creaming coefficient, and can be suitable for primary, secondary or even more emulsification levels. The oil-water separation efficiency of the aerogel membrane for demulsification is greater than 99%.

(2) The present application provides a simple and convenient method for preparing the aforementioned hierarchical porous aerogel membrane. That is, a polymer is added into a nanofiber sol to form a multi-component casting solution, and the casting solution undergoes instantaneous phase separation when coated on a substrate and transferred to a coagulation bath, thereby forming a porous hydrogel membrane, and the hierarchical porous aerogel membrane can be obtained after drying. The method has low cost and short manufacturing cycle, and is easy to be industrialized; and the surface micrometer-scale pores and the morphology, quantity, and distribution of channels in the hierarchical porous aerogel membrane can be regulated by controlling relevant reaction conditions.

(3) The membrane assembly and emulsification device based on the aforementioned hierarchical porous aerogel membrane and in-situ confined liquid membrane can have both membrane emulsification and demulsification functions, and can prepare oil-in-water emulsions and oil/water/oil multiple emulsions.

### DESCRIPTION OF THE DRAWINGS

To describe the technical solutions in the embodiments of the present application or in the prior art more clearly, the following briefly describes the accompanying drawings required for describing the embodiments or the prior art. Apparently, the accompanying drawings in the following description show only some embodiments stated in the present application, and other drawings may still be derived from these accompanying drawings by those of ordinary skills in the art without creative efforts.

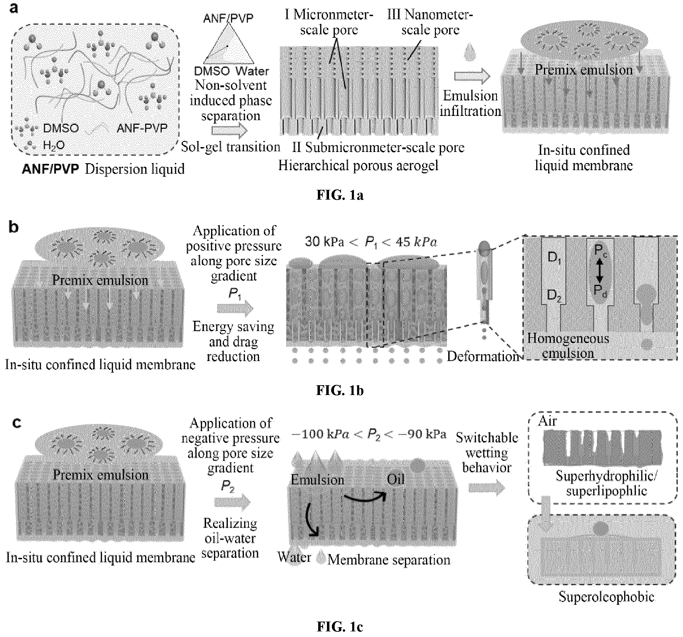

FIG. 1a is a schematic diagram of preparation of a hierarchical porous aerogel membrane with longitudinal channels by a single-layer substrate method, and in-situ formation of an in-situ confined liquid membrane after infiltrating the hierarchical porous aerogel membrane with an emulsion, in an embodiment of the present application; FIG. 1b is a schematic diagram of membrane emulsification using the in-situ confined liquid membrane in an embodiment of the present application; FIG. 1c is a schematic diagram of membrane separation using the in-situ confined liquid membrane in an embodiment of the present application;

FIGS. 2a, 2b, 2c, 2d, and 2e are cross-sectional views of the hierarchical porous aerogel membranes prepared in Examples 1-5 of the present application, respectively, under a cold-field electron microscope;

FIG. 3 is a statistical diagram of the number of micrometer-scale pores on the surfaces of the hierarchical porous aerogel membranes prepared in Examples 1, 2, 3, and 5 of the present application;

FIG. 4 is a pore size distribution diagram of the micrometer-scale pores on the surface of the hierarchical porous aerogel membranes prepared in Examples 1-4 of the present application;

FIG. 5 is a schematic diagram of nitrogen adsorption/desorption curves of the hierarchical porous aerogel membranes prepared in Examples 1-4 of the present application;

FIG. 6 is a statistical diagram of the surface micrometer-scale pore sizes, micrometer-scale channel lengths, and submicrometer-scale channel lengths of the hierarchical porous aerogel membranes prepared in Examples 5 and 6 of the present application;

FIG. 7 is a cold-field electron micrograph of the surfaces and cross-sections of the hierarchical porous aerogel membranes prepared in Examples 5 and 6 of the present application;

FIGS. 8a, 8b, 8c, 8d, and 8e are cross-sectional views of the hierarchical porous aerogel membranes prepared in Examples 7-11 of the present application, respectively, under a cold-field electron microscope;

FIG. 9 is a schematic structural diagram of an emulsification device 1 containing a hierarchical porous aerogel membrane in the present application;

FIG. 10 is a diagram showing the transmembrane pressure difference of the emulsion between the liquid membrane formed in situ in Example 12 of the present application and the solid-liquid composite membrane formed in advance in Comparative Example 1;

FIGS. 11a, 11b, 11c, 11d, and 11e are optical comparison diagrams of the emulsions before and after emulsification in Examples 13-17 of the present application, respectively;

FIG. 12 is a particle size distribution diagram of the emulsions before and after emulsification in Examples 13-17 of the present application;

FIG. 13 is a statistical diagram of the particle sizes of the emulsions before and after emulsification in Examples 13-17 of the present application;

FIG. 14 is a schematic structural diagram of an emulsification device 2 containing a double-layer membrane component in Example 21 of the present application;

FIG. 15 is an optical picture of the oil/water/oil emulsion prepared in Example 18 of the present application;

FIG. 16 is an optical picture of the Sudan Red dyed emulsion before and after oil-water separation in Example 19 of the present application;

FIG. 17 is an ultraviolet-near infrared spectrum of the Sudan red dyed emulsion before and after oil-water separation in Example 19 of the present application;

FIG. 18 is a Fourier infrared spectrogram of the emulsion before and after oil-water separation in Example 19 of the present application;

FIG. 19 is a diagram showing contact angle tests of the hierarchical porous aerogel membrane prepared in Example 7 of the present application with cycloethane in water and air, respectively;

FIG. 20 is a statistical graph of the particle size change of the emulsion prepared in Example 19 of the present application over time.

## SPECIFIC IMPLEMENTATIONS

The technical solution of the present application is described in detail hereafter in conjunction with specific embodiments, so that those skilled in the art can better understand and implement the technical solution of the present application. Specific functional details disclosed herein should not be interpreted as limiting, but merely as a basis for the claims and as a representative basis for teaching those skilled in the art to variously employ the present application in virtually any appropriately detailed example.

### Example 1

This example provided a hierarchical porous aerogel membrane with longitudinal channels and a preparation method thereof.

0.2 g of a Kevlar fiber, 0.2 g of potassium tert-butoxide, 0.2 g of methanol, and 10 g of dimethyl sulfoxide were mixed and stirred until uniform to obtain a Kevlar fiber dispersion. The Kevlar fiber dispersion was added with 0.05 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 $\mu$m was blade-coated onto aluminum foil paper 1 with a blade. The aluminum foil paper 1 with the casting solution 2 was immersed in deionized water at room temperature, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze-dried continuously at 40-100°C and a gas pressure of 5-100 kPa for 4 hr to obtain a hierarchical porous aerogel membrane (denoted as 4-1-K88).

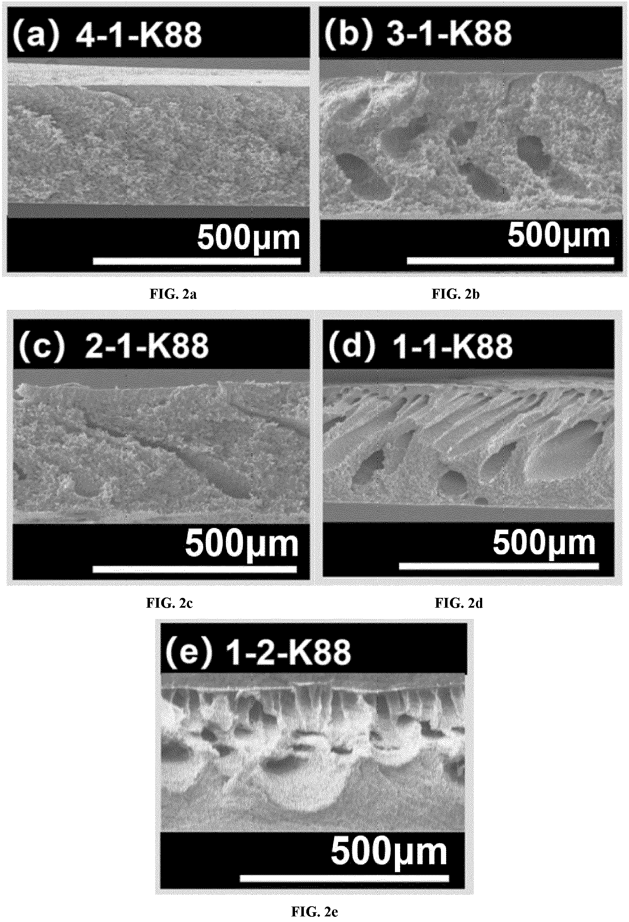

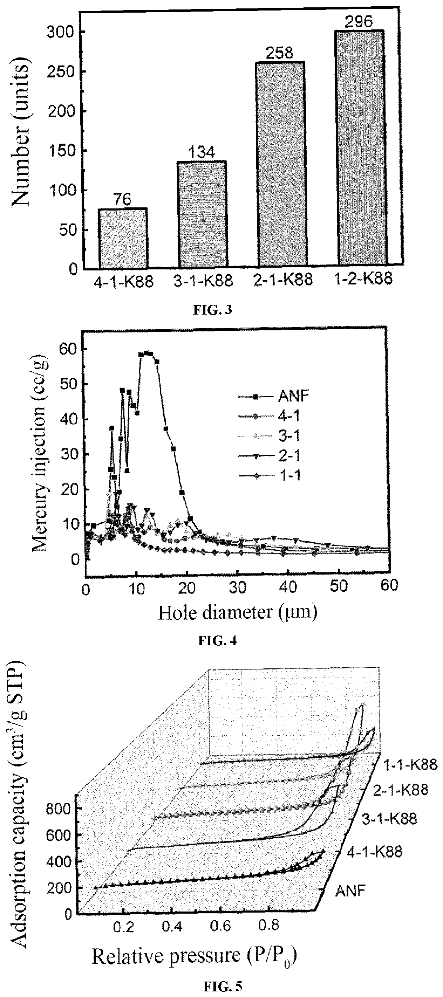

A schematic structural diagram of the hierarchical porous aerogel membrane was shown in FIG. 1a. The membrane has micrometer-scale pores on a surface thereof, and the interior of the membrane contained longitudinal micrometer-scale channels, submicrometer-scale channels, and nanometer-scale three-dimensional network mesopores. The membrane cross-sectional morphology of 4-1-K88 was shown in FIG. 2a, the statistical diagram of the number of micrometer-scale pores on the surface was shown in FIG. 3, the pore size distribution was shown in FIG. 4 (corresponding to the curve shown as 4-1), and the schematic diagram of the nitrogen adsorption/desorption curve was shown in FIG. 5.

## Example 2

This example provided a hierarchical porous aerogel membrane with longitudinal channels and a preparation method thereof.

0.6 g of a Kevlar fiber, 0.6 g of potassium tert-butoxide, 0.6 g of methanol, and 30 g of dimethyl sulfoxide were mixed and stirred until uniform to obtain a Kevlar fiber dispersion. The Kevlar fiber dispersion was added with 0.2 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 $\mu$m was blade coated onto aluminum foil paper 1 with a blade. The aluminum foil paper 1 with the casting solution 2 was immersed in deionized water at room temperature, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze dried continuously at 40-100°C and a gas pressure of 5-100 kPa for 4 hr to obtain a hierarchical porous aerogel membrane (3-1-K88).

The membrane sectional morphology of 3-1-K88 was shown in FIG. 2b, the statistical diagram of the number of micrometer-scale pores on the surface was shown in FIG. 3, the pore size distribution was shown in FIG. 4 (corresponding to the curve shown as 3-1), and the schematic diagram of the nitrogen adsorption/desorption curve was shown in FIG. 5.

## Example 3

This example provided a hierarchical porous aerogel membrane with longitudinal channels and a preparation method thereof.

0.2 g of a Kevlar fiber, 0.2 g of potassium tert-butoxide, 0.2 g of methanol, and 10 g of dimethyl sulfoxide were mixed and stirred until uniform to obtain a Kevlar fiber dispersion. The Kevlar fiber dispersion was added with 0.4 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 $\mu$m was blade coated onto aluminum foil paper 1 with a blade. The aluminum foil paper 1 with the casting solution 2 was immersed in deionized water at room temperature, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze dried continuously at 40-100°C and a gas pressure of 5-100 kPa for 4 hr to obtain a hierarchical porous aerogel membrane (2-1-K88).

The membrane sectional morphology of 2-1-K88 was shown in FIG. 2c, the statistical diagram of the number of micrometer-scale pores on the surface was shown in FIG. 3, the pore size distribution was shown in FIG. 4 (corresponding to the curve shown as 2-1), and the schematic diagram of the nitrogen adsorption/desorption curve was shown in FIG. 5.

## Example 4

This example provided a hierarchical porous aerogel membrane with longitudinal channels and a preparation method thereof.

0.2 g of a Kevlar fiber, 0.2 g of potassium tert-butoxide, 0.2 g of methanol, and 10 g of dimethyl sulfoxide were mixed and stirred until uniform to obtain a Kevlar fiber dispersion. The Kevlar fiber dispersion was added with 0.2 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 μm was blade coated onto aluminum foil paper 1 with a blade. The aluminum foil paper 1 with the casting solution 2 was immersed in deionized water at room temperature, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze dried continuously at 40-100°C and a gas pressure of 5-100 kPa for 4 hr to obtain a hierarchical porous aerogel membrane (1-1-K88).

The membrane sectional morphology of 1-1-K88 was shown in FIG. 2d, the pore size distribution was shown in FIG. 4 (corresponding to the curve shown as 1-1), and the schematic diagram of the nitrogen adsorption/desorption curve was shown in FIG. 5.

## Example 5

This example provided a hierarchical porous aerogel membrane with longitudinal channels and a preparation method thereof.

0.2 g of a Kevlar fiber, 0.2 g of potassium tert-butoxide, 0.2 g of methanol, and 10 g of dimethyl sulfoxide were mixed and stirred until uniform to obtain a Kevlar fiber dispersion. The Kevlar fiber dispersion was added with 0.4 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 μm was blade coated onto aluminum foil paper 1 with a blade. The aluminum foil paper 1 with the casting solution 2 was immersed in deionized water at room temperature, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze dried continuously at 40-100°C and a gas pressure of 5-100 kPa for 4 hr to obtain a hierarchical porous aerogel membrane (1-2-K88).

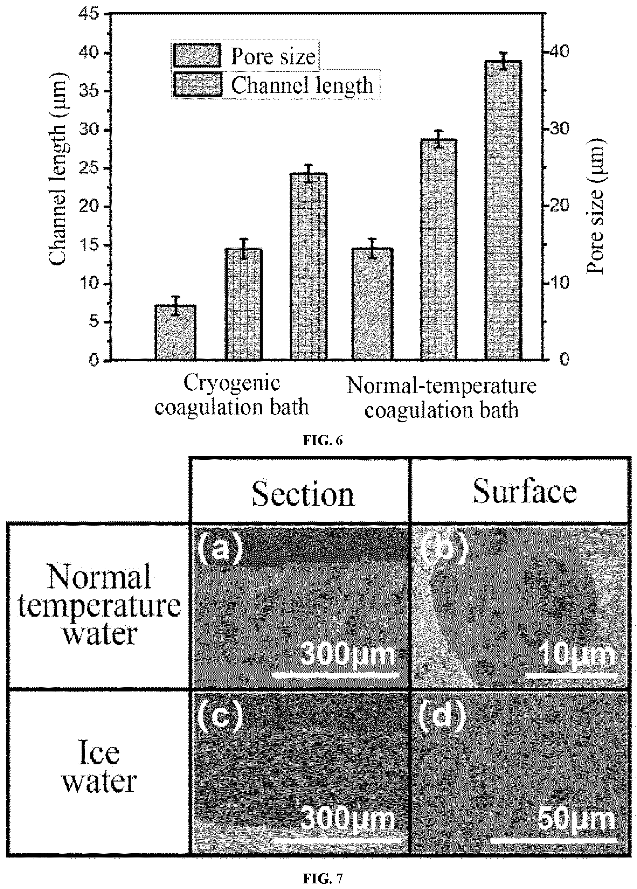

The membrane sectional morphology of 1-2-K88 was shown in FIG. 2e, the statistical diagram of the number of micrometer-scale pores on the surface was shown in FIG. 3, the statistical results of micrometer-scale pore sizes, micrometer-scale channel lengths, and submicrometer-scale channel lengths of it were shown in FIG. 6, and the cold-field electron micrograph of its surface and section was shown in FIG. 7 (corresponding to the room-temperature water coagulation bath).

## Example 6

This example provided a hierarchical porous aerogel membrane with longitudinal channels and a preparation method thereof.

0.2 g of a Kevlar fiber, 0.2 g of potassium tert-butoxide, 0.2 g of methanol, and 10 g of dimethyl sulfoxide were mixed and stirred until uniform to obtain a Kevlar fiber dispersion. The Kevlar fiber dispersion was added with 0.4 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 μm was blade coated onto aluminum foil paper 1 with a blade. The aluminum foil paper 1 with the casting solution 2 was immersed in low-temperature deionized water at a temperature of 3°C, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze dried continuously at 40-100°C and a gas pressure of 5-100 kPa for 4 hr to obtain a hierarchical porous aerogel membrane.

the statistical results of the micrometer-scale pores on the surface, micrometer-scale channel lengths, and submicrometer-scale channel lengths of the hierarchical porous aerogel membrane with longitudinal channels prepared in this example were shown in FIG. 6, and its sectional morphology and surface morphology were shown in FIG. 7 (corresponding to the ice water coagulation bath). Combining FIGS. 6 and 7, it could be seen that a hierarchical porous aerogel membrane with a dense surface and narrow channels can be prepared in the low-temperature coagulation bath.

## Example 7

This example provided a hierarchical porous aerogel membrane with longitudinal channels and a preparation method thereof.

0.2 g of a Kevlar fiber, 0.2 g of potassium tert-butoxide, 0.2 g of methanol, and 10 g of dimethyl sulfoxide were mixed and stirred until uniform to obtain a Kevlar fiber dispersion. The Kevlar fiber dispersion was added with 0.4 g of polyvinyl pyrrolidone (with molecular weight of 1,300,000, K88) and continuously stirred for 3 hr to completely form a uniform casting solution. The casting solution was allowed to stand for 4 hr to remove bubbles and then ready for later use.

The casting solution was coated by using a single substrate method. As shown in FIG. 1a, a casting solution 2 with a thickness of 500 $\mu$m was blade coated onto aluminum foil paper 1 with a blade. The aluminum foil paper 1 with the casting solution 2 was immersed in a room-temperature coagulation bath of deionized water and ethanol at a volume ratio of 5:1 at a temperature of 10°C, and when the solution completely changed from orange to light yellow and nearly transparent, the aluminum foil paper was detached from the substrate to obtain a hydrogel membrane.

The hydrogel membrane was replaced with water every 2 hours for 5-6 times, and subjected to solvent replacement with a mixed solution of tertiary butanol and deionized water at a volume ratio of 1:1 for 4 hr.

Then, the membrane was freeze dried continuously at 40-100°C and a gas pressure of 5-100 kPa for 4 hr to obtain a hierarchical porous aerogel membrane.

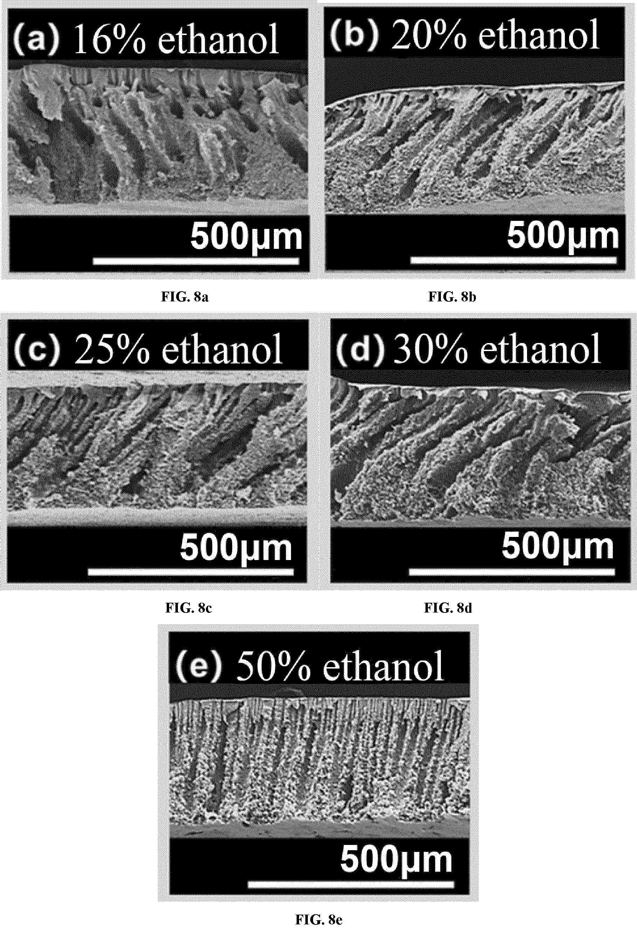

The sectional morphology of the hierarchical porous aerogel membrane with longitudinal channels prepared in this example was shown in FIG. 8a, and the channel sizes and morphologies of it had great differences.

## Example 8

The only difference between this example and Example 7 was that the molecular weight of polyvinyl pyrrolidone as employed was 8,000, other things were carried out in the same way as those in Example 7, and a hierarchical porous aerogel membrane with little pore channel distribution was obtained.

## Example 9

The only difference between this example and Example 7 was that the molecular weight of polyvinyl pyrrolidone as employed was 24,000, other things were carried out in the same way as those in Example 7, and a small number of hierarchical porous aerogel membranes were obtained.

## Example 10

The only difference between this example and Example 7 was that the molecular weight of polyvinyl pyrrolidone as employed was 58,000, other things were carried out in the same way as those in Example 7, and a large number of hierarchical porous aerogel membranes were obtained.

## Example 11

The only difference between this example and Example 7 was that the employed coagulation bath was a coagulation bath of deionized water and ethanol at a volume ratio of 4:1, other things were carried out in the same way as those in Example 7, and a hierarchical porous aerogel membrane was obtained.

The sectional morphology of the hierarchical porous aerogel membrane with longitudinal channels prepared in this example was shown in FIG. 8b, and the channel morphology of it exhibited the same inclination angle.

## Example 12

The only difference between this example and Example 7 was that the employed coagulation bath at a volume ratio of 3:1, other things were carried out in the same way as those in Example 7, and a hierarchical porous aerogel membrane was obtained.

The cross-sectional morphology of the hierarchical porous aerogel membrane with longitudinal channels prepared in this example was shown in FIG. 8c, and the channel size began to increase.

## Example 13

The only difference between this example and Example 7 was that the employed coagulation bath at a volume ratio of 2:1, other things were carried out in the same way as those in Example 7, and a hierarchical porous aerogel membrane was obtained.
The cross-sectional morphology of the hierarchical porous aerogel membrane with longitudinal channels prepared in this example was shown in FIG. 8d, and the channel sizes varied greatly.

## Example 14

The only difference between this example and Example 7 was that the employed coagulation bath was a coagulation bath of deionized water and ethanol at a volume ratio of 1:1, other things were carried out in the same way as those in Example 7, and a hierarchical porous aerogel membrane was obtained.
The sectional morphology of the hierarchical porous aerogel membrane with longitudinal channels prepared in this example was shown in FIG. 8e, and the channel morphology changed from inclined to vertical and had a uniform size.

## Example 15

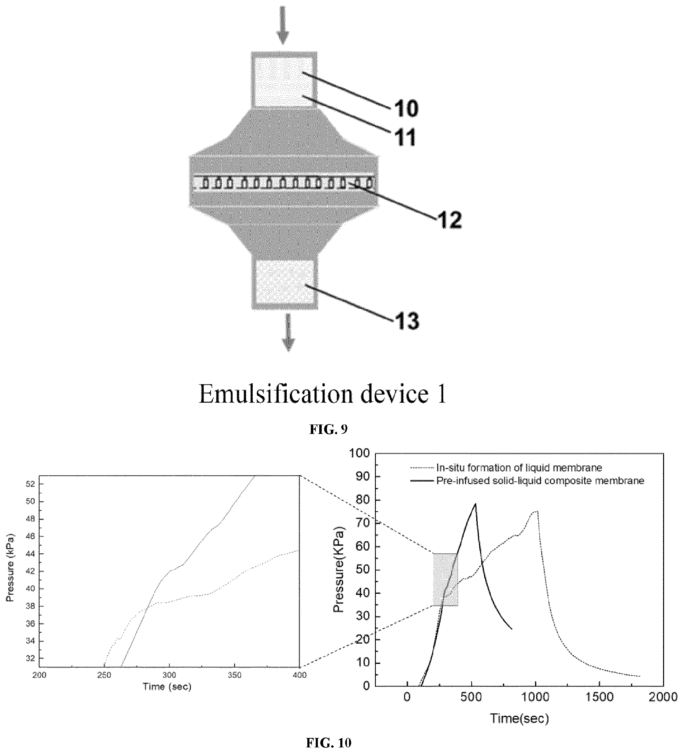

This example provided a membrane emulsification method, as shown in FIG. 1b.
The emulsification device 1 in FIG. 9 was employed, and the emulsification device 1 included a channel 10 and an aerogel membrane 12, wherein the aerogel membrane 12 was a disc with a diameter of 25 mm cut from the hierarchical porous aerogel membrane prepared in Example 13 of the present application.
A uniform premix emulsion 11 (with the volume ratio of dodecane to deionized water in the premix emulsion 11 of 2:1, and containing AKY at a mass ratio of 3%) was injected into the channel 10 at a fixed flow rate of 1 ml/min until the mixed emulsion passed through the aerogel membrane 12. The transmembrane pressure difference of the emulsion during the whole process was tested using a pressure sensor (PX2300-10BDI). The test results were shown in FIG. 10 (corresponding to a curve of the in-situ formed liquid membrane). For the in-situ formed hierarchical porous aerogel-based confined liquid membrane, the trans-membrane pressure difference of the emulsion was 38.7 kPa.

## Comparative Example 1

The only difference between Comparative Example 1 and Example 15 was that firstly the disc with a diameter of 25 mm cut from the hierarchical porous aerogel membrane prepared in Example 13 was immersed in functional liquid perfluoropolyether lubricating oil DuPont Krytox 101 to obtain a solid-liquid composite membrane loaded with DuPont Krytox 101, and then the solid-liquid composite membrane was installed in the emulsification device 1. The same mixed emulsion was injected in the same way as that in Example 15, and the whole-process pressure difference values when the emulsion passed through the membrane were tested. The test results were shown in FIG. 9 (corresponding to a curve of the pre-infused solid-liquid composite membrane), and for the solid-liquid composite membrane pre-infused with functional liquid, the transmembrane pressure difference of the emulsion was 42.3 kPa.
By comparing Example 15 with Comparative Example 1, it could be seen that the in-situ formed hierarchical porous aerogel-based confined liquid membrane provided by the present application had a drag reduction effect compared to that of the solid-liquid composite membrane pre-infused with functional liquid.

## Example 16

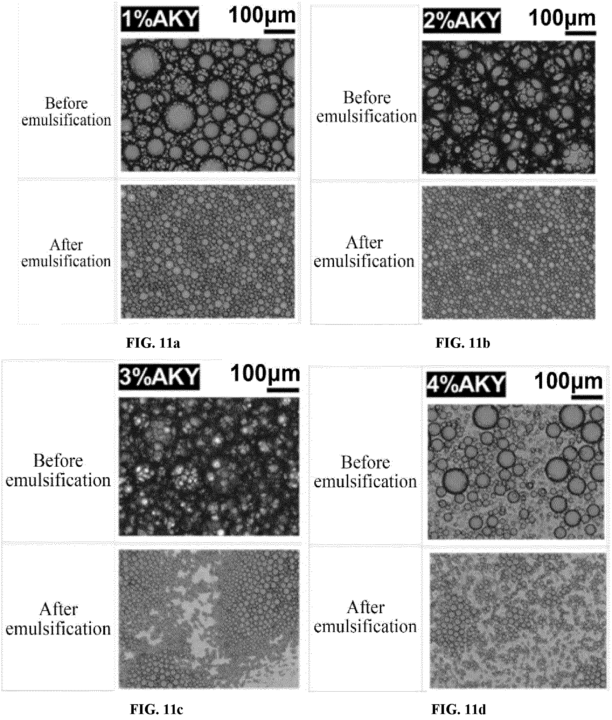

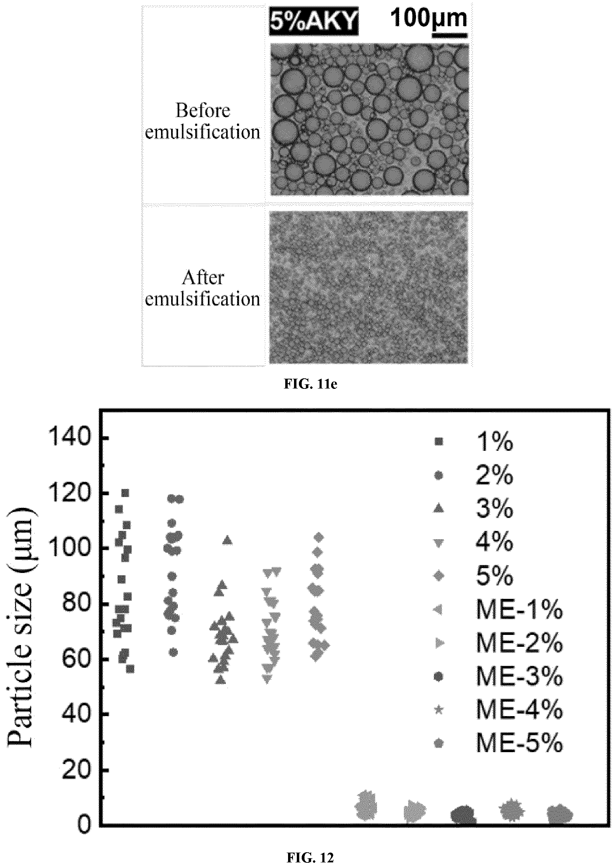

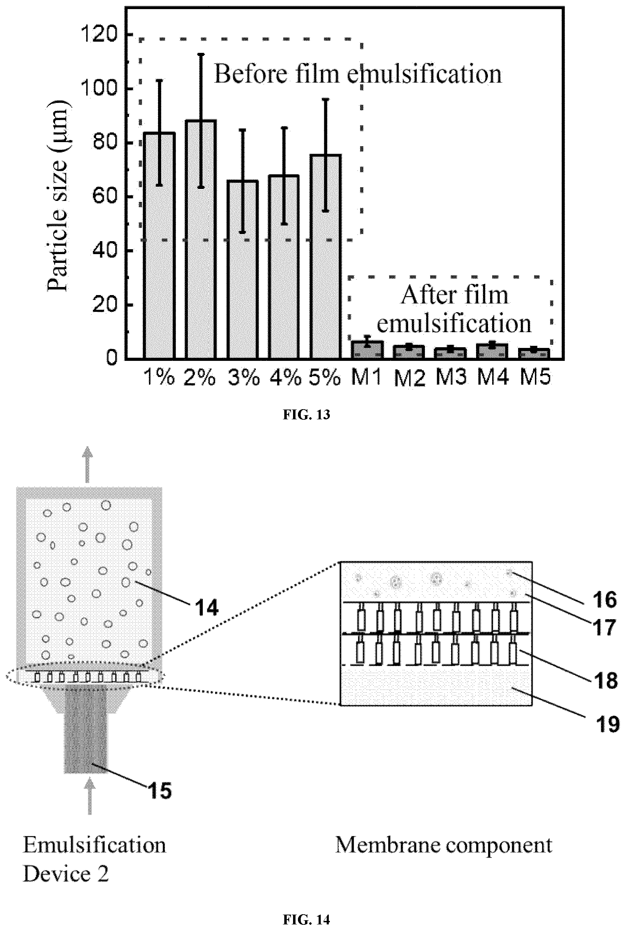

This example provided a membrane emulsification method.
The emulsification device 1 in FIG. 9 was employed, and the emulsification device 1 included a channel 10 and an aerogel membrane 12, wherein the aerogel membrane 12 was a disc with a diameter of 25 mm cut from the hierarchical porous aerogel membrane prepared in Example 13 of the present application.
A uniform premix emulsion was formulated. The premix emulsion contained cycloethane and deionized water at a volume ratio of 2:1 and contained AKY at a mass ratio of 1%.
A uniform mixed emulsion was injected into the channel 10 at a pressure of 45 kPa and a fixed flow rate of 3 mL/min. The mixed emulsion was passed through the aerogel membrane 12 to obtain an emulsion 13.
In this example, optical micrographs of the mixed emulsion before emulsification and the emulsion after membrane emulsification were shown in FIG. 11a. The particle size distribution diagram of the emulsions before and after emulsification was shown in FIG. 12 (1% in FIG. 12 corresponding to the particle size distribution before emulsification, and ME-1% corresponding to the particle size distribution after emulsification). The particle size statistics diagram was shown in FIG. 13 (corresponding to 1%, M1). According to FIGS. 11, 12, and 13, it could be seen that the emulsion prepared by the hierarchical porous aerogel membrane of the present application had good uniformity.

**Example 17**

The only difference between Example 17 and Example 16 was that the volume ratio of cycloethane and deionized water in the premixed emulsion of Example 17 was 2:1, and it contained AKY at a mass ratio of 2%.

In this example, optical micrographs of the mixed emulsion before emulsification and the emulsion after membrane emulsification were shown in FIG. 11b. The particle size distribution diagram of the emulsions before and after emulsification was shown in FIG. 12 (2% in FIG. 12 corresponding to the particle size distribution before emulsification, and ME-2% corresponding to the particle size distribution after emulsification). The particle size statistics diagram was shown in FIG. 13 (corresponding to 2%, M2). According to FIGS. 11, 12, and 13, it could be seen that the emulsion prepared by the hierarchical porous aerogel membrane of the present application had good uniformity.

**Example 18**

The only difference between Example 18 and Example 16 was that the volume ratio of cycloethane and deionized water in the premixed emulsion mixed emulsion of Example 15 was 2:1, and it contained AKY at a mass ratio of 3%.

In this example, optical micrographs of the mixed emulsion before emulsification and the emulsion after membrane emulsification were shown in FIG. 11c. The particle size distribution diagram of the emulsions before and after emulsification was shown in FIG. 12 (3% in FIG. 12 corresponding to the particle size distribution before emulsification, and ME-3% corresponding to the particle size distribution after emulsification). The particle size statistics diagram was shown in FIG. 13 (corresponding to 3%, M3). According to FIGS. 11, 12, and 13, it could be seen that the emulsion prepared by the hierarchical porous aerogel membrane of the present application had good uniformity.

**Example 19**

The only difference between Example 19 and Example 16 was that the volume ratio of cycloethane and deionized water in the premixed emulsion mixed emulsion of Example 19 was 2:1, and it contained AKY at a mass ratio of 4%.

In this example, optical micrographs of the mixed emulsion before emulsification and the emulsion after membrane emulsification were shown in FIG. 11d. The particle size distribution diagram of the emulsions before and after emulsification was shown in FIG. 12 (4% in FIG. 12 corresponding to the particle size distribution before emulsification, and ME-4% corresponding to the particle size distribution after emulsification). The particle size statistics diagram was shown in FIG. 13 (corresponding to 4%, M4). According to FIGS. 11, 12, and 13, it could be seen that the emulsion prepared by the hierarchical porous aerogel membrane of the present application had good uniformity.

**Example 20**

The only difference between Example 20 and Example 16 was that the volume ratio of cycloethane and deionized water in the premixed emulsion mixed emulsion of Example 17 was 2:1, and it contained AKY at a mass ratio of 5%.

In this example, optical micrographs of the mixed emulsion before emulsification and the emulsion after membrane emulsification were shown in FIG. 11e. The particle size distribution diagram of the emulsions before and after emulsification was shown in FIG. 12 (5% in FIG. 12 corresponding to the particle size distribution before emulsification, and ME-5% corresponding to the particle size distribution after emulsification). The particle size statistics diagram was shown in FIG. 13 (corresponding to 5%, M5). According to FIGS. 11, 12, and 13, it could be seen that the emulsion prepared by the hierarchical porous aerogel membrane of the present application had good uniformity.

In combination with the aforementioned Examples 16-17, it could be seen that the size of the emulsion prepared by premix membrane emulsification using the hierarchical porous aerogel membrane in the present application was very uniform, and the emulsion size could be reduced by about 18 times compared with the premix emulsion.

**Example 21**

This example provided a direct membrane emulsification method employing a double-layer structure membrane assembly.

The emulsification device 2 shown in FIG. 14 was employed. The emulsification device 2 included a channel 15, a double-layer structure membrane assembly 18 and a container 14, wherein the double-layer structure membrane assembly 18 was composed as follows. The hierarchical porous aerogel membrane prepared in Example 13 of the present application was cut into a first disc and a second disc with a diameter of 25 mm, and the first disc and the second disc were stacked, wherein the subsubmicrometer-scale channels of the first disc and the micrometer-scale channels of the second disc were adjacently disposed. The container 14 contained a continuous phase 17, which was a solution in deionized water containing AKY at a mass concentration of 5%. The double-layer structure membrane assembly 18 was installed between an outlet end of the channel 15 and an inlet end of the container 14, the micrometer-scale channel of the first disc was allowed to be close to the outlet end of the channel 15, and the submicrometer-scale channel of the second disc was allowed to be close to the inlet end of the container 14. This arrangement manner had a smaller transmembrane pressure difference and had the energy-saving and drag-reduction effect.

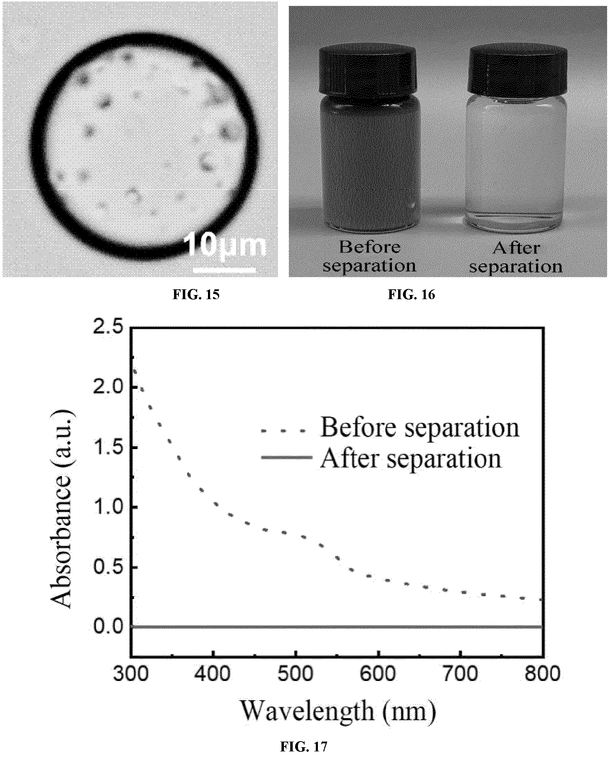

The dispersed phase 19 (in this example, the dispersed phase 19 was hexadecane) was injected into the channel 15 at a pressure of 30 kPa and a fixed flow rate of 2 mL/min and passed through a double-layer structure membrane component, and then entered a continuous phase 17 to form a multiple emulsion 16. The obtained multiple emulsion 16 was an oil/water/oil structure, which was shown in FIG. 15.

**Example 22**

This example provided an emulsion separation method, as shown in FIG. 1c.

The hierarchical porous aerogel membrane of Example 13 was cut into discs with a diameter of 35 mm. 30 mL of cyclohexane, 10 mL of deionized water, and 2 g of oleth-10 carboxylic acid were taken and mixed evenly to form a stable mixed emulsion, and 0.02 g of oily dye Sudan III was added to dye the cyclohexane.

The mixed emulsion was placed at a positive pressure end using a suction filtration device at a pressure of -0.09 MPa for oil-water separation, and the separation efficiency was calculated by analyzing the components in the separated sample.

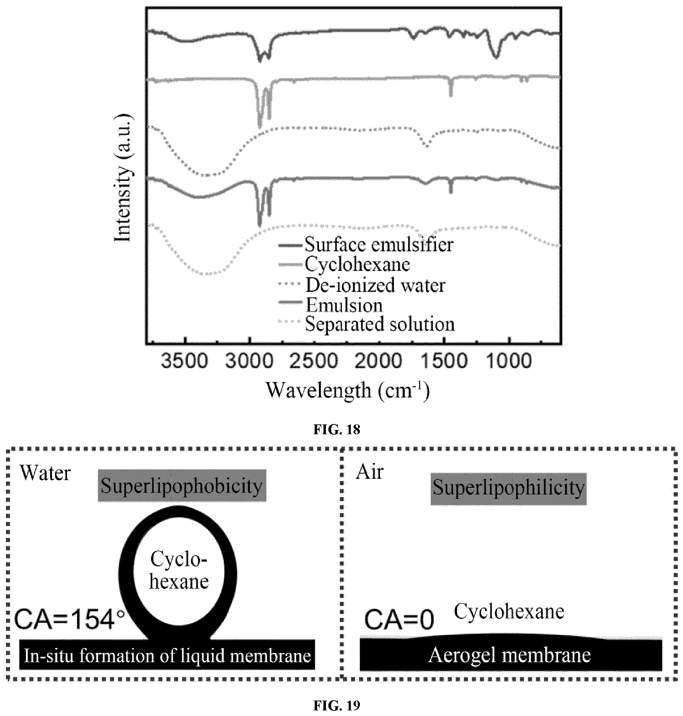

FIG. 16 was an optical photograph of the emulsion before and after separation by the aforementioned method, and FIG. 17 was an ultraviolet near-infrared spectrogram of the emulsion before and after separation by the aforementioned method. According to FIGS. 16 and 17, the hierarchical porous aerogel membrane provided by the present application had good separation performance, and the red turbid solution became a clear solution after separation. FIG. 18 was a Fourier infrared spectrogram before and after the emulsion was separated by the aforementioned method. The first, second and third spectrograms from top to bottom were the standard Fourier infrared characteristic peaks of the emulsifier, cycloethane and deionized water, respectively. The fourth and fifth spectra from top to bottom in FIG. 18 were the infrared spectrograms of the emulsion before separation and the solution obtained after separation, respectively. By comparison, it could be seen that the emulsion before separation contained characteristic peaks of water, cycloethane and the surfactant, while the solution after separation only showed the characteristic peak of deionized water. This indicated that the hierarchical porous aerogel membrane provided in the present application had a good oil-water separation performance. According to the ultraviolet near-infrared spectrogram of FIG. 17, it could be evaluated that the oil-water separation efficiency of the membrane was greater than 99%.

Moreover, the hierarchical porous aerogel membrane prepared in the present application was tested for the membrane flux, transmembrane pressure difference, hydrophilicity and lipophilicity, and the emulsification performance.

1. Membrane flux

Membrane flux was used for characterizing the rate at which feed liquid is filtered by a membrane material. It was usually expressed by the volume of a permeate that passed through a unit membrane area per unit time at a certain pressure and temperature:

$$J = V/At$$

where V was the volume of the permeate liquid in L; A was the effective area of the membrane in $m^2$; T was the test time in h; and J was the membrane flux in $L/(m^2 \cdot h)$.

The hierarchical porous aerogel membrane prepared in Example 11 was tested. The membrane diameter was 25 mm, the experimental feeding liquid was an emulsion (with dimethicone:deionized water:oleth-10 carboxylic acid of 1:3:0.04), and the feeding rate was 3 mL/min. The test time was 14 min and the volume of the permeated emulsion was 16 mL. The test results showed that the membrane flux j of the hierarchical porous aerogel membrane from which the emulsion was passed through was 511.03 $L/(m^2 \cdot h)$.

A comparative test was conducted with the hierarchical porous aerogel membrane pre-infused with the functional liquid perfluoropolyether lubricating oil DuPont Krytox 101. Firstly, the hierarchical porous aerogel membrane prepared in Example 11 was immersed in the functional liquid perfluoropolyether lubricating oil DuPont Krytox 101 to obtain a hierarchical porous aerogel-based liquid membrane loaded with DuPont Krytox 101. The membrane flux of the membrane pre-infused with perfluoropolyether oil K101 was tested by the same method as above, and the membrane flux J at which the emulsion was passed through was found to be 139.76 L/(m$^2$·h).

2. Transmembrane pressure difference test of the emulsion

A transmembrane pressure difference test of the emulsion was conducted with a pressure sensor (PX2300-10BDI). The hierarchical porous aerogel membrane prepared in Example 6 was cut into discs with a diameter of 25 mm by a laser cutter, and any sample taken from the discs was pre-infiltrated with the functional liquid perfluoropolyether oil K101 as a control. The transmembrane pressure difference of the hierarchical porous aerogel membrane sample and the solid-liquid composite membrane infused with the functional liquid K101 through which the emulsion was passed respectively was tested. The resultant results were shown in FIG. 9.

3. Test of hydrophilicity and lipophilicity

The hierarchical porous aerogel membrane of Example 10 was cut into rectangular pieces with a length of 4 cm and a width of 1 cm. The contact angle between the membrane and cyclohexane was tested in air using a video optical contact angle analyzer. The test results were shown in FIG. 18, indicating that the hierarchical porous aerogel membrane was superphilic to cyclohexane in air. That was, it exhibited superlipophilicity in air.

The same hierarchical porous aerogel membrane was adhered to a transparent cuvette cell, and deionized water was injected into the transparent cuvette cell. A contact angle between the in-situ formed liquid membrane and cyclohexane was tested in water. The test results were shown in FIG. 18, indicating that the in-situ formed liquid membrane in water exhibited super-repellent to cyclohexane, i.e., superoleophobicity in water.

4. Emulsification index test

The hierarchical porous aerogel membranes in Examples 7, 8, 9, and 10 were employed to prepare emulsions (the preparation process was the same as the method described in Example 16, except that different membranes were replaced as test objects and a uniform mixed solution containing different concentrations of AKY was used). The obtained emulsions were allowed to stand at room temperature for 3 weeks, and then the volume of the emulsion layer and the total volume of the sample were determined respectively. The emulsification index was calculated according to the equation below:

$$\text{Creaming index} = (h_e/h_t)\ 100\%$$

where, $h_e$ was the volume of the emulsion layer, and $h_t$ was the total volume of the sample. The separation of the emulsion referred to the separation of water/oil phases, and was a phenomenon of emulsion instability. When the emulsification index was larger, the percentage of the emulsion layer in the total sample volume was greater, and the emulsion was more stable. The calculated results were shown in Table 1.

Table 1. Emulsification indexes of the membranes in Examples 7-10 applied for preparing emulsion by rapid membrane emulsification

| Example | 1 % AKY | 2% AKY | 3% AKY | 4% AKY | 5% AKY |
|---|---|---|---|---|---|
| Example 7 | 60.9% | 61.7% | 60.3% | 60.2% | 54.7% |
| Example 8 | 59.4% | 61.4% | 61.2% | 62.7% | 63.3% |
| Example 9 | 66.7% | 65.8% | 65.3% | 66.3% | 65.4% |
| Example 10 | 73.5% | 74.2% | 78.8% | 78.1% | 78.5% |

5. Emulsion stability and cycle stability of membrane emulsification

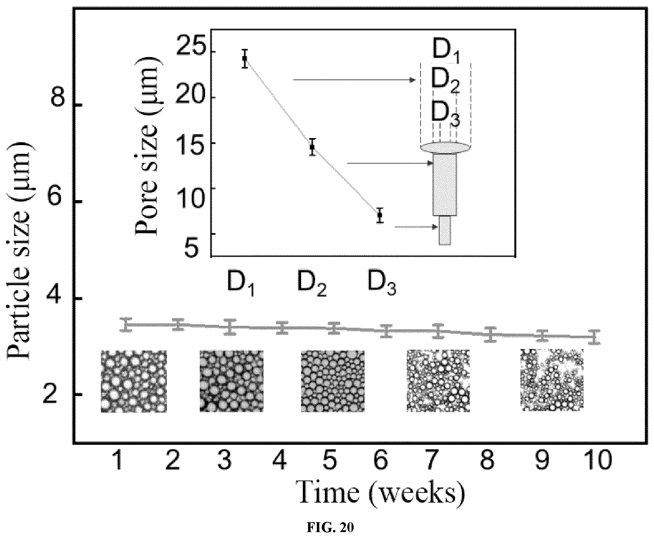

The microemulsion prepared in Example 18 was sampled every other week and observed under an optical microscope. Then the particle size of the emulsion was counted by the software of Image J, and the particle size of the emulsion after three times of membrane emulsification of the same membrane was used for measuring the emulsion stability of the membrane. The statistical test structure was shown in FIG. 20.

In summary, in the present application a hydrophilic polymer additive is added during a deprotonation process of aramid nanofibers to cause the instantaneous phase separation during a sol-gel process, thereby preparing a hierarchical porous aerogel membrane. The hierarchical porous aerogel membrane provides rich confined space for liquid from micrometer, submicrometer and nanometer scales in membrane emulsification and demulsification, so as to form a liquid membrane in situ, thereby introducing stimulus responsiveness and realizing the diversity of performance. The hierarchical porous aerogel-based liquid membrane had good drag reduction and energy-saving, anti-fouling properties, and outstanding emulsification and oil-water separation performance. The method of preparing the hierarchical porous aerogel membrane provided in the present application is simple, has a short cycle, and is suitable for industrial mass production. This lays a good foundation for the application of the aerogel membrane in membrane emulsification and membrane separation.

Aspects, embodiments, features and examples of the present application should be considered illustrative in all respects and not intended to be limiting, and the scope of the present application is defined solely by the claims. Other embodiments, modifications and uses will be apparent to those skilled in the art without departing from the spirit and scope of the claimed application.

Moreover, the inventor of the present disclosure also has conducted experiments with other raw materials, process operations, and process conditions mentioned in this specification with reference to the aforementioned examples, and have achieved relatively ideal results.

While the present application has been described with reference to illustrative embodiments, it will be appreciated by those skilled in the art that various other changes, omissions and/or additions may be made and substantially equivalents may be substituted for elements of the described embodiments without departing from the spirit and scope of the present application. Moreover, many modifications may be made to adapt a particular situation or material to the teachings of the present application without departing from the scope of the present application. Therefore, it is intended that herein the present application is not limited to the particular embodiments disclosed for carrying out the present application, but that the present application will include all embodiments falling within the scope of the accompanying claims. Moreover, unless specifically stated, any use of the terms first, second, etc. do not denote any order or importance, but rather the terms first, second, etc. are used for distinguishing one element from another.

**Claims**

1. A hierarchical porous aerogel membrane, wherein: the hierarchical porous aerogel membrane has micrometer-scale pores distributed on a membrane surface, a micrometer-scale channel, a submicrometer-scale channel and a nanometer-scale three-dimensional network mesopore are distributed inside the hierarchical porous aerogel membrane, and the pores respectively corresponding to the micrometer-scale channel, the submicrometer-scale channel and the nanometer-scale three-dimensional network mesopore are simultaneously distributed on a membrane cross-section of the hierarchical porous aerogel membrane.

2. The hierarchical porous aerogel membrane according to claim 1, wherein: a pore size of the micrometer-scale pore is 20-80 $\mu$m, and/or a diameter of the micrometer-scale channel is 20-50 $\mu$m, and/or a diameter of the submicrometer-scale channel is 2-20 $\mu$m, and/or a pore size of the nanometer-scale three-dimensional network mesopore is less than 50 nm;

   and/or, the micrometer-scale channel and the submicrometer-scale channel are longitudinal channels; preferably, the micrometer-scale channel and the submicrometer-scale channel are longitudinal channels that are perpendicular or nearly perpendicular to the membrane surface, and the micrometer-scale channel and submicrometer-scale channel are arranged in layers in a direction of membrane thickness;
   and/or, the hierarchical pores of the hierarchical porous aerogel membrane are nanometer-scale three-dimensional network mesopores obtained by instantaneous phase separation and sol-gel transformation between Kevlar nanofibers and pore-forming polymers, followed by solvent exchange and drying treatment, preferably, the polymer comprises at least one of polyethylene glycol, polyvinyl alcohol and polyvinyl pyrrolidone, and more preferably polyvinyl pyrrolidone;
   and/or, pore areas of three types of pores corresponding to the micrometer-scale channels, the submicrometer-scale channels, and the nanometer-scale three-dimensional mesopores account for 2-5%, 40-65%, and 30-68%, respectively;
   and/or, the hierarchical porous aerogel membrane is superhydrophilic and superlipophilic in air.

3. A method for preparing a hierarchical porous aerogel membrane, comprising:

   coating a casting solution containing a Kevlar nanofiber and a polymer onto a substrate, and then transferring into a coagulation bath to form a hierarchical porous hydrogel membrane; and
   subjecting the hierarchical porous hydrogel membrane to solvent exchange treatment and a drying treatment to obtain the hierarchical porous aerogel membrane.

4.  The preparation method according to claim 3, specifically comprising: a manner of coating the casting solution on the substrate comprises a single-layer substrate method, wherein the single-layer substrate method comprises coating the casting solution on at least one surface of the substrate;

    preferably, in the casting solution, a mass ratio of the Kevlar nanofiber to the polymer is 4:1-1:2;
    and/or, the fineness of the Kevlar nanofiber is 200 D-1,000 D;
    and/or, the polymer comprises at least one of polyethylene glycol, polyvinyl alcohol and polyvinyl pyrrolidone, preferably comprises polyvinyl pyrrolidone, and more preferably, the average molecular weight of the polyvinyl pyrrolidone is 8 kDa-1,300 kDa;
    and/or, a method for preparing the casting solution specifically comprises: dispersing the Kevlar fiber, a alkaline regulator, and a viscosity reducer uniformly in dimethyl sulfoxide to obtain a Kevlar nanofiber dispersion, and adding the polymer into the Kevlar nanofiber dispersion to obtain the casting solution;
    preferably, the concentration of the Kevlar nanofiber in the Kevlar nanofiber dispersion is 1-3 wt.%, and/or the alkaline regulator comprises potassium tert-butoxide and/or potassium hydroxide, and/or the viscosity reducer comprises methanol and/or ethanol, and/or the mass ratio of the Kevlar fiber, the alkaline regulator and viscosity reducer in the Kevlar nanofiber dispersion is 1:1:1-2:2:1;
    and/or, the preparation method specifically comprises: coating the casting solution on a substrate by a blade coating method; preferably, a speed of the blade coating method is 5-10 mm/s, and/or a spin coating time is 5-15 s, and/or a distance between the blade and the substrate is 250-1,000 $\mu$m;
    and/or, the substrate comprises glass and/or aluminum foil;
    and/or, the coagulation bath comprises water or a combination of water and ethanol, and preferably, when the coagulation bath comprises water and ethanol, the volume ratio of water to ethanol is 5:1-1:1, and more preferably 2:1-1:1;
    and/or, the temperature of the coagulation bath is 0-20°C;
    and/or, the solvent exchange treatment employs a mixed solution comprising tert-Butyl alcohol and water, and preferably, the volume ratio of the tert-Butyl alcohol to water is 1: 1-1:4;
    and/or, the drying treatment comprises freeze drying and/or supercritical drying, preferably the drying treatment comprises freeze drying, and more preferably, the freeze drying comprises continuous drying for 4-6 h under conditions of a temperature of -40--100°C and an air pressure of 5-100 kPa.

5.  The preparation method according to any one of claims 3-4, wherein: the preparation method regulates the number, pore size and distribution of micrometer-scale pores of the hierarchical porous aerogel membrane, and regulates the morphology, number and distribution of the micrometer-scale channels and submicrometer-scale channels by regulating at least one of the mass ratio of the Kevlar nanofiber and the polymer in the casting solution, the content of the solvent in the casting solution, the temperature of the coagulation bath, the composition of the coagulation bath, and the molecular weight of the polymer.

6.  A hierarchical porous aerogel membrane obtained by the preparation method according to any one of claims 3-5.

7.  A hierarchical porous aerogel-based in-situ confined liquid membrane, comprising: the hierarchical porous aerogel membrane according to any one of claims 1, 2 and 6, and a liquid which infiltrates and fills the hierarchical porous aerogel membrane.

8.  The hierarchical porous aerogel-based in-situ confined liquid membrane according to claim 7, wherein: the hierarchical porous aerogel-based in-situ confined liquid membrane is formed in situ during membrane emulsification or emulsion separation by filling a membrane emulsification sample or the emulsion separation sample in a hierarchical porous aerogel membrane in a process of passing the sample through the hierarchical porous aerogel membrane;

    and/or, the hierarchical porous aerogel-based in-situ confined liquid membrane is capable of switching between membrane emulsification and oil-water separation functions according to different sample injection pressures and/or injection flow rates;
    and/or, when the sample injection pressure is 30-45 kPa and/or the injection flow rate is 1 ml/min-3 ml/min, the hierarchical porous aerogel-based in-situ confined liquid membrane has at least the membrane emulsification function; and when the sample injection pressure is -0.09--0.1 MPa and/or the injection speed is 0.1 ml/min-0.3 ml/min, the hierarchical porous aerogel-based in-situ confined liquid membrane has at least the oil-water separation function;
    and/or, the hierarchical porous aerogel-based in-situ confined liquid membrane is superoleophobic in water.

9. Use of the hierarchical porous aerogel membrane according to any one of claims 1, 2, and 6 or the hierarchical porous aerogel-based in-situ confined liquid membrane according to any one of claims 7 and 8 in membrane emulsification and/or oil-water separation.

10. A membrane assembly, wherein: the membrane assembly comprises a plurality of layers of the hierarchical porous aerogel membranes according to any one of claims 1, 2 and 6.

11. The membrane assembly according to claim 10, wherein: the membrane assembly comprises a plurality of the hierarchical porous aerogel membranes disposed as stacked with each other, and the hierarchical porous aerogel membrane has longitudinal channels;

preferably, in the membrane assembly, the micrometer-scale channels in one hierarchical porous aerogel membrane are disposed adjacent to the submicrometer-scale channels in another adjacent hierarchical porous aerogel membrane;

more preferably, the membrane assembly is a double-layer membrane structure, wherein the micrometer-scale channels of the first hierarchical porous aerogel membrane are disposed adjacent to the submicrometer-scale channels of the second hierarchical porous aerogel membrane.

12. A method for emulsifying a membrane, comprising: a direct membrane emulsification method or premix membrane emulsification method;

wherein the direct membrane emulsification method comprises: passing a dispersed phase through the hierarchical porous aerogel membrane according to any one of claims 1, 2, and 6 or the membrane assembly according to any one of claims 10 and 11 under conditions of a pressure of 30-45 kPa and/or an injection rate of 1 ml/min-3 ml/min, and then allowing to enter a continuous phase to obtain an emulsion; and

the premix membrane emulsification method comprises: passing a uniform premixed emulsion containing an oil phase, an aqueous phase and a surfactant through the hierarchical porous aerogel membrane according to any one of claims 1, 2, and 6 or the membrane assembly according to any one of claims 10 and 11 under conditions of a pressure of 30-45 kPa and/or an injection speed of 1 mL/min-3 mL/min to obtain an emulsion.

13. The membrane emulsification method according to claim 12, wherein: the dispersed phase in the direct membrane emulsification method and the oil phase in the premix membrane emulsification method are organic substances that are immiscible with water, preferably comprising at least one of dodecane, hexadecane, cyclohexane, mineral oil, kerosene and dimethicone, and more preferably comprising at least one of dodecane, hexadecane and cyclohexane;

and/or, in the premix emulsion, a volume ratio of the oil phase to the water phase is 1:3-3: 1;

and/or, in the premixed membrane emulsification method, the surfactant comprises at least one of oleth-10 carboxylic acid, Tween 80, Tween 85, Span 80, Span 85 and sodium dodecyl sulfate, preferably oleth-10 carboxylic acid;

and/or, the content of the surfactant is 1%-5% of the total mass of the premix emulsion;

and/or, in the direct membrane emulsification method, the dispersed phase is allowed to pass through the membrane assembly and then enter a mixed solution containing a continuous phase and a surfactant, wherein the surfactant comprises at least one of oleth-10 carboxylic acid, Tween 80, Tween 85, Span 80, Span 85 and sodium dodecyl sulfate, preferably oleth-10 carboxylic acid;

and/or, the emulsion obtained by the membrane emulsification is an oil-in-water emulsion and/or an oil/water/oil emulsion;

and/or, the size distribution of the emulsion obtained by the membrane emulsification method is 0-10 $\mu$m;

and/or, a creaming index of the emulsion obtained by the membrane emulsification method is 54.7%-78.8%.

14. A method for oil-water separation, comprising: passing a sample to be separated through the hierarchical porous aerogel membrane according to any one of claims 1, 2, and 6 or the membrane assembly according to any one of claims 10 and 11 under the action of a pressure of -0.09--0.1 MPa and/or an injection speed of 0.1 ml/min-0.3 ml/min to achieve oil-water separation;

preferably, the oil-water separation efficiency of the emulsion separation method is greater than 99%.

15. An emulsification device, comprising: a liquid inlet channel, a membrane unit and a driving mechanism, wherein the membrane unit comprises the hierarchical porous aerogel membrane according to any one of claims 1, 2 and 6 or the membrane assembly according to any one of claims 10 and 11, one end of the liquid inlet channel is communicated with the membrane unit, and the sample to be emulsified is injected into the liquid inlet channel and flows into the membrane unit for emulsification under the action of the driving mechanism;

preferably, the membrane unit comprises the membrane assembly with the double-layer membrane structure according to claim 14, that is, the micrometer-scale channel of the first hierarchical porous aerogel membrane of the membrane assembly with the double-layer membrane structure is disposed adjacent to the submicrometer-scale channel of the second hierarchical porous aerogel membrane, and the second hierarchical porous aerogel membrane is disposed close to the liquid inlet channel, so that the sample to be emulsified flows into the membrane assembly in a direction of first passing through the micrometer-scale channel of the second hierarchical porous aerogel membrane.

**FIG. 1a**

**FIG. 1b**

**FIG. 1c**

FIG. 2a

FIG. 2b

FIG. 2c

FIG. 2d

FIG. 2e

FIG. 3

FIG. 4

FIG. 5

**FIG. 6**

**FIG. 7**

FIG. 8a

FIG. 8b

FIG. 8c

FIG. 8d

FIG. 8e

Emulsification device 1

**FIG. 9**

**FIG. 10**

FIG. 11a

FIG. 11b

FIG. 11c

FIG. 11d

FIG. 11e

FIG. 12

**FIG. 13**

Emulsification
Device 2

Membrane component

**FIG. 14**

**FIG. 15**

Before separation    After separation

**FIG. 16**

**FIG. 17**

**FIG. 18**

**FIG. 19**

**FIG. 20**

**TRANSLATION**

## INTERNATIONAL SEARCH REPORT

| International application No. |
|---|
| **PCT/CN2024/083756** |

### A. CLASSIFICATION OF SUBJECT MATTER

B01D71/44(2006.01)i; B01D71/52(2006.01)i; B01D67/00(2006.01)i; C08J9/28(2006.01)i; C08J9/40(2006.01)i

According to International Patent Classification (IPC) or to both national classification and IPC

### B. FIELDS SEARCHED

Minimum documentation searched (classification system followed by classification symbols)

IPC: B01D71, B01D67, C08J9

Documentation searched other than minimum documentation to the extent that such documents are included in the fields searched

Electronic data base consulted during the international search (name of data base and, where practicable, search terms used)

CNTXT, ENTXT, ENTXTC, WPABS, WPABSC, DWPI, VEN, VCN, CJFD, CNKI: 气凝胶, 膜, 微米, 纳米, 孔, 三维, 凯夫拉, 芳纶, 相分离, 溶胶, 凝胶, 溶剂, 置换, 干燥, 限域, 乳化, aerogel, membrane, micro+, nano+, pore, hole, aperture, three, dimension+, kevlar, aramid, phase, separat+, sol, gel, solvent, displac+, substitut+, dry, confin+, emulsif+

### C. DOCUMENTS CONSIDERED TO BE RELEVANT

| Category* | Citation of document, with indication, where appropriate, of the relevant passages | Relevant to claim No. |
|---|---|---|
| X | CN 116640354 A (WUHAN TEXTILE UNIVERSITY) 25 August 2023 (2023-08-25) description, paragraphs [0008]-[0024], and figure 1 | 1-15 |
| Y | CN 109608686 A (SUZHOU INSTITUTE OF NANO-TECH AND NANO-BIONICS, CHINESE ACADEMY OF SCIENCES) 12 April 2019 (2019-04-12) description paragraphs [0008]-[0015], figures 1a-1d | 1-15 |
| Y | CN 113278191 A (SHAANXI UNIVERSITY OF SCIENCE AND TECHNOLOGY) 20 August 2021 (2021-08-20) description, paragraphs [0006]-[0022], and figure 2 | 1-15 |
| A | CN 115368621 A (SUZHOU INSTITUTE OF NANO-TECH AND NANO-BIONICS, CHINESE ACADEMY OF SCIENCES) 22 November 2022 (2022-11-22) entire document | 1-15 |
| A | CN 111773928 A (INSTITUTE OF URBAN ENVIRONMENT, CHINESE ACADEMY OF SCIENCES) 16 October 2020 (2020-10-16) entire document | 1-15 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 June 2024** | **24 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/083756**

### C. DOCUMENTS CONSIDERED TO BE RELEVANT

| Category* | Citation of document, with indication, where appropriate, of the relevant passages | Relevant to claim No. |
|---|---|---|
| A | CN 102794113 A (SUZHOU INSTITUTE OF NANO-TECH AND NANO-BIONICS, CHINESE ACADEMY OF SCIENCES) 28 November 2012 (2012-11-28)<br>entire document | 1-15 |
| A | CN 110982114 A (SUZHOU INSTITUTE OF NANO-TECH AND NANO-BIONICS, CHINESE ACADEMY OF SCIENCES) 10 April 2020 (2020-04-10)<br>entire document | 1-15 |
| A | CN 104368247 A (SUZHOU BINARY CENTURY NANO-TECHNOLOGY CO., LTD. et al.) 25 February 2015 (2015-02-25)<br>entire document | 1-15 |
| A | US 11111343 B2 (THE REGENTS OF THE UNIVERSITY OF MICHIGAN) 07 September 2021 (2021-09-07)<br>entire document | 1-15 |

Form PCT/ISA/210 (second sheet) (July 2022)

TRANSLATION

**INTERNATIONAL SEARCH REPORT**
**Information on patent family members**

International application No.

**PCT/CN2024/083756**

| Patent document cited in search report | | | Publication date (day/month/year) | Patent family member(s) | | | Publication date (day/month/year) |
|---|---|---|---|---|---|---|---|
| CN | 116640354 | A | 25 August 2023 | None | | | |
| CN | 109608686 | A | 12 April 2019 | None | | | |
| CN | 113278191 | A | 20 August 2021 | None | | | |
| CN | 115368621 | A | 22 November 2022 | CN | 115368621 | B | 15 March 2024 |
| CN | 111773928 | A | 16 October 2020 | None | | | |
| CN | 102794113 | A | 28 November 2012 | CN | 102794113 | B | 04 March 2015 |
| CN | 110982114 | A | 10 April 2020 | CN | 110982114 | B | 27 May 2022 |
| CN | 104368247 | A | 25 February 2015 | CN | 104368247 | B | 28 December 2016 |
| US | 11111343 | B2 | 07 September 2021 | EP | 3397675 | A1 | 07 November 2018 |
| | | | | EP | 3397675 | A4 | 04 September 2019 |
| | | | | KR | 20180095939 | A | 28 August 2018 |
| | | | | WO | 2017117376 | A1 | 06 July 2017 |
| | | | | US | 2019085139 | A1 | 21 March 2019 |
| | | | | JP | 2019511387 | A | 25 April 2019 |
| | | | | JP | 6961238 | B2 | 05 November 2021 |
| | | | | WO | 2017116598 | A1 | 06 July 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311360008